# FASCICULE DE BREVET EUROPEEN

(11) **EP 0 578 561 B1**
(45) Date de publication et mention de la délivrance du brevet: **16.04.1997**
(21) Numéro de dépôt: 93401750.0
(22) Date de dépôt: 06.07.1993
(51) Int. Cl.: H01Q 1/24, H01Q 7/08, H04B 1/08

(54) **Récepteur du type à antenne intérieure en ferrite**
Empfänger mit innerer Ferritantenne
Receiver with internal ferrite antenna

(30) Priorité: 10.07.1992 FR 9208588
(43) Date de publication de la demande: 12.01.1994
(73) Titulaire: FRANCE TELECOM, 75015 Paris (FR); TELEDIFFUSION DE FRANCE, société anonyme, 75015 Paris (FR)
(72) Inventeur: Piole, Philippe, F-35700 Rennes (FR)
(74) Mandataire: Keib, Gérard

(56) Documents cités:
- EP-A- 0 444 416
- US-A- 2 790 899
- US-A- 4 193 076
- US-A- 5 050 236

## Description

La présente invention concerne un dispositif de réception comportant un récepteur équipé d'une antenne intérieure en ferrite.

On connaît des récepteurs miniaturisés en particulier utilisés pour la réception de données RDS (selon la norme Radio Data System), ces récepteurs notamment dénommés "PAGERS" étant pourvus uniquement d'une antenne intérieure en ferrite.

De tels récepteurs miniaturisés ne conviennent pas à la réception à l'intérieur d'un habitacle (par exemple véhicule, habitation, etc) étant donné la diminution du seuil de perception de l'ordre de 15 à 25 dB qui en résulte. L'effet de diminution est comme celui observé lors du passage sous un tunel ou un pont : l'obstacle se comporte comme un guide d'onde ayant une fréquence de coupure propre qui dépend des dimensions de ce dernier en rapport avec la longueur d'onde utilisée.

A bord d'un véhicule, une perte de champ peut signifier une perte de liaison. Lors de la mise en place d'un tel récepteur miniaturisé à l'intérieur d'un véhicule, il semble logique de placer ce dernier le plus proche possible de la vitre. En fait, des mesures prouvent que, bien que près du bord, le champ extérieur est atténué fortement du côté interne de la vitre. L'explication tient au fait que le contour métallique du pare-brise ainsi que celui des vitres latérales se comporte comme des antennes à fentes rayonnantes ayant des fréquences de coupure au-delà de la fréquence de réception. Il en résulte que l'obstacle se comporte comme un filtre passe-haut.

Ces récepteurs miniaturisés ne sont pas pourvus d'une prise d'antenne comme en ont les autoradio, étant donné que l'antenne interne est une antenne ferrite électronique de dimensions faibles (12 X 12 X 80 millimètres). Le problème de la réception avec le récepteur miniaturisé à antenne intérieure ferrite à l'intérieur d'un habitacle n'est actuellement pas résolu.

Un dispositif de réception du type comportant un récepteur équipé d'une antenne intérieure en ferrite et comprenant un élément de génération d'un signal radio-électrique relié à au moins un dispositif de couplage est notamment connu du brevet US 4 193 076 (SANSUI). Il comporte une self de couplage montée sur le même barreau de ferrite qu'une self d'antenne. Un tel montage constitue un simple transformateur qui ne permet pas une amélioration des performances. On connaît par ailleurs du brevet US 2 790 899 une antenne re-rayonnante présentant une self de couplage inductif ne comportant pas de ferrite. Il est connu enfin du brevet US 5 050 236 un répéteur passif à ferrite qui fonctionne en tant que circuit d'adaptation ou d'accord par re-rayonnement d'une antenne locale. Ces dispositifs ne permettent pas non plus une amélioration des performances.

L'idée de base de l'invention est d'associer à l'antenne du récepteur un élément résonateur permettant d'améliorer les performances.

L'invention concerne dans ce but un dispositif de réception du type précité caractérisé en ce que le dispositif de couplage est distinct de l'antenne ferrite et comporte un barreau de ferrite ayant une surface externe dont une majeure partie est entourée par une boucle non fermée, ladite boucle présentant un axe principal sensiblement aligné avec un axe principal de l'antenne ferrite, ce qui permet d'obtenir un couplage à la fois direct et directif.

On obtient ainsi une boucle résonante sur substrat ferrite.

Le dispositif peut avantageusement comporter un circuit d'interface pour réaliser ladite liaison entre ledit élément et le dispositif de couplage. Le circuit d'interface peut être en particulier un convertisseur permettant un changement de fréquence. En particulier, pour un récepteur d'émissions numériques, ledit changement de fréquence peut avoir une valeur comprise entre ± 1 et ± quelques MHz (par exemple entre ± 1 et 2 MHz).

Ledit élément est de préférence une antenne disposée à l'extérieur du récepteur. De ce fait, l'antenne peut être disposée à l'extérieur de l'habitacle, par exemple une antenne extérieure disposée sur le toit d'un véhicule, et être reliée au dispositif de couplage par l'intermédiaire d'un câble coaxial.

Selon un mode de réalisation préféré, la boucle est fermée par un condensateur de manière à obtenir une résonance à une fréquence sensiblement située dans une plage de fréquences de réception du récepteur. Le barreau de ferrite peut être en particulier sensiblement de forme cubique.

Dans le cas où l'antenne de ferrite du récepteur est espacée d'une certaine distance d'un bord du récepteur par lequel le couplage avec le dispositif selfique peut être réalisé, le récepteur comporte avantageusement un dispositif de transfert, sensiblement identique audit dispositif de couplage et disposé entre celui-ci et l'antenne de ferrite de manière à produire un transfert d'induction vers l'antenne de ferrite.

L'antenne extérieure peut être symétrique (du type doublet ou bien du type cadre) et présenter deux bornes de raccordement. Le dispositif de réception présente alors deux dispositifs de couplage disposés de part et d'autre de l'antenne ferrite du récepteur, chacun des dispositifs de couplage ayant d'une part une première borne connectée à une borne respective de l'antenne extérieure, et étant d'autre part interconnectés par une deuxième borne.

D'autres caractéristiques et avantages de l'invention apparaîtront mieux à la lecture de la description qui va suivre, donnée à titre d'exemple non limitatif en liaison avec les dessins qui représentent :
- la figure 1, un dispositif de réception selon l'invention,
- la figure 2, un couplage par flux entre un élément de couplage et une antenne intérieure ferrite d'un récepteur,
- les figures 3a et 3b, deux modes de réalisation d'un dispositif selfique selon l'invention,
- les figures 4a et 4b, une variante de réalisation de la figure 3a et une variante de la figure 4a,
- la figure 5 un récepteur mettant en oeuvre le couplage à travers le logement d'une pile d'un récepteur,
- les figures 6a et 6b, le fonctionnement d'un dispositif selon l'invention avec des antennes symétriques du type "cadre" (figure 7a) ou "doublet" (figure 7b),
- la figure 8, un dispositif de réception selon l'invention mettant en oeuvre un circuit d'interface.

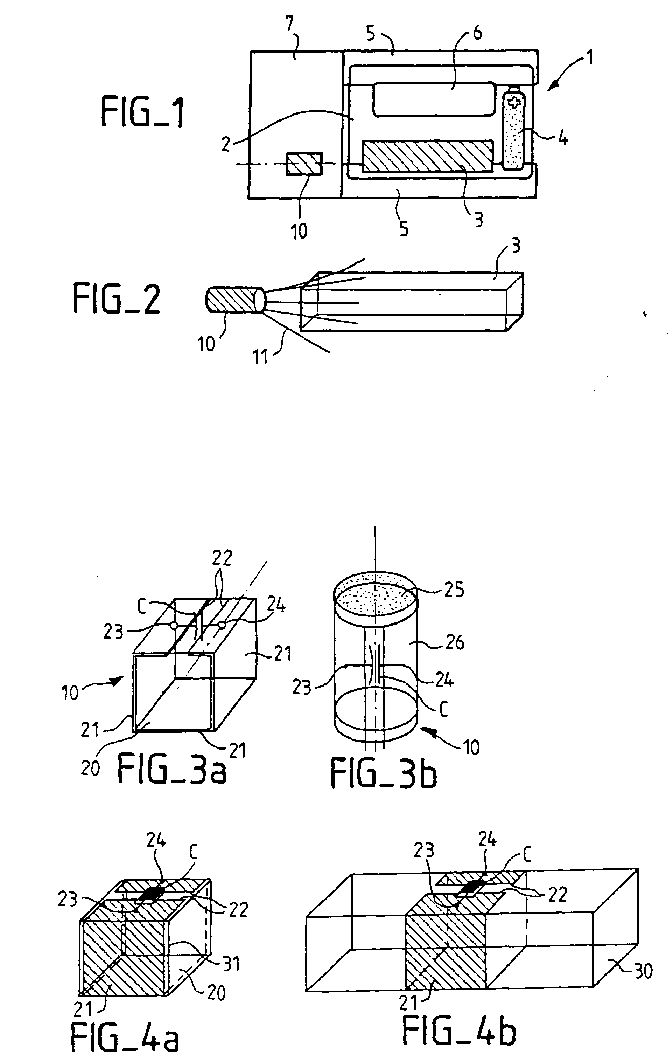

Selon la figure 1, un récepteur miniaturisé 1 (par exemple dénommé "pager") comporte une antenne ferrite intérieure 3, une pile 4 et un cadran indicateur 6. Il est introduit par coulissement dans un logement 5 d'un réceptacle 7 dans lequel est disposé un élément résonnant 10. Un couplage est obtenu selon l'invention, en créant une induction extérieure au moyen de l'élément 10 que l'on place dans le sens du barreau de ferrite 3 constituant l'antenne intérieure de récepteur 1. Cette bobine extérieure 10 fait partie intégrante du réceptacle 7 et est fixée sur un circuit imprimé. Cette position est choisie pour obtenir le meilleur couplage, à savoir un couplage par flux (figure 2) selon lequel l'élément 10 est disposé au plus près d'une extrémité de l'antenne 3. L'axe principal de la boucle 21 ou 26 (en traits mixtes aux figures 3a et 3b) est sensiblement aligné avec un axe principal de l'antenne 3 (en traits mixtes aux figures 1 et 2).

Selon la figure 3a, l'élément 10 est une pièce de ferrite 20 sensiblement cubique (par exemple de dimensions 11 x 12 x 12 millimètres) entourée d'un ruban métallique 21 collé sur sa surface et en faisant pratiquement le tour. Ce ruban 21 constitue une boucle ouverte qui génère le flux et des bornes de prise de contact 23 et 24 sont disposées au voisinage des bords 22 adjacents du ruban 21.

Pour optimiser l'ensemble, une capacité C est connectée entre les bornes 23 et 24, c'est-à-dire en parallèle avec la boucle 21. Le condensateur C vient fermer la boucle pour obtenir une résonance du cube qui se traduit par une augmentation de la résistance de rayonnement (augmentation du flux) et une meilleure adaptation à l'amplificateur. Pour des fréquences élevées, une résonance peut être obtenue sans la capacité C, uniquement avec la capacité présente entre les bords 22 du ruban 21.

Dans l'exemple précité, pour un ruban de 10 mm de large, une capacité C de 39 pF donne une fréquence de résonance de 132 MHz, une capacité C de 47 pF donne une résonance à 120 MHz et une capacité C de 68 pF donne une résonance à 95 MHz. On peut donc ainsi faire varier facilement la fréquence de résonance du cube, c'est-à-dire de l'ensemble constitué par la self, la capacité et la pièce en ferrite 20, pour optimiser le couplage à l'antenne 3.

L'augmentation des pertes obtenue par la mise en résonance augmente la bande passante du résonateur. Le compromis entre pertes et résistance de rayonnement est obtenu en utilisant le volume minimal de ferrite. En effet, un tronçon de ferrite non recouvert par la boucle se comporte comme un élément réactif dispersif qu'il est préférable d'éviter.

La figure 3b montre une variante selon laquelle un ruban 26 est collé sur la circonférence d'un cylindre de ferrite 25 pour former une spire ouverte unique. Comme sur la figure 3, un condensateur C peut être connecté entre les bornes 23 et 24. Le cylindre 25 a par exemple un diamètre de 9,7 mm, une longueur de 12 mm, et le ruban en métal 26, une largeur de 9 mm ; il est enroulé de manière à ce que ses bords 22 soient espacés de 5 mm.

A la figure 4a, le condensateur C est soudé sur la surface du cube 20 en chevauchement des bords 22.

La figure 4b représente un barreau de ferrite allongé, par exemple, de longueur 40 mm et de section 11 x 12 mm à la partie centrale duquel est collée une spire unique 21 de largeur 10 mm. Comme à la figure 4a, un condensateur C est fixé à chevauchement sur les bords 22 de la spire 21. Comme il est indiqué ci-dessus, le tronçon non recouvert par la spire 21 se comporte comme un élément réactif, donc, non optimal. Cependant, il convient de remarquer que ce mode de réalisation permet d'obtenir des fréquences de résonance plus basses à valeur égale de la capacité C, par exemple une résonance à 96 MHz pour une capacité C de 39 pF et une résonance de 85 MHz pour une capacité C de 47 pF.

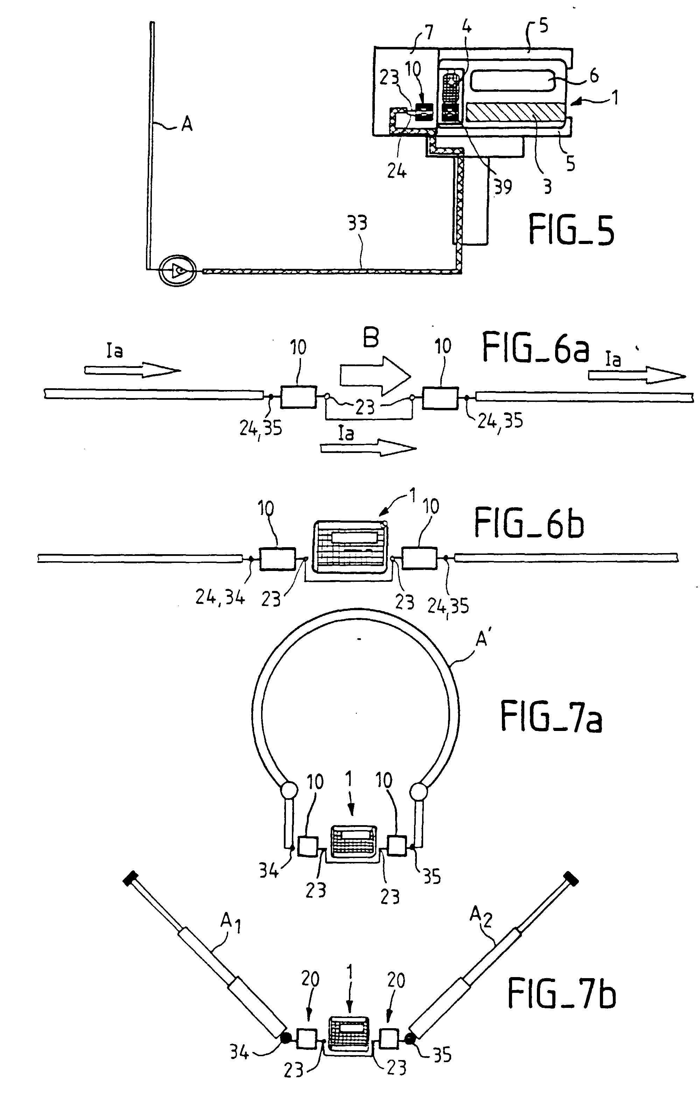

La figure 5 représente un mode de réalisation permettant de solutionner le problème d'un couplage entre l'élément de couplage 10 et l'antenne 3 à travers un logement recevant un accumulateur 4. Sur la figure 5, un accumulateur de taille réduite dégage une partie inférieure dans laquelle est disposé un élément résonateur 39 identique au résonateur 10 dont les bornes 23 et 24 sont connectées à l'extrémité d'un câble coaxial 33 et dont l'autre extrémité est connectée à une antenne A. Ainsi placé, l'élément 37 permet aussi bien la continuité électrique de l'accumulateur ou de la pile 4 que la canalisation du flux sous l'accumulateur 4 entre le résonateur 10 et l'antenne 3.

Selon les figures 6a, 6b, 7a et 7b, le couplage avec une antenne symétrique, par exemple du type "cadre" (figure 7a) ou du type "doublet" à deux éléments A₁ et A₂ (figure 7b) est obtenu par mise en série de deux éléments de couplage 10 disposés de part et d'autre du récepteur 1. Deux bornes 23 des éléments 10 sont interconnectées et leur autre borne 24 est connectée à une borne respectivement 34, 35, l'élément d'antenne symétrique. Un courant Iₐ circule à travers les éléments 10, ce qui permet de canaliser le flux B à travers l'antenne 3.

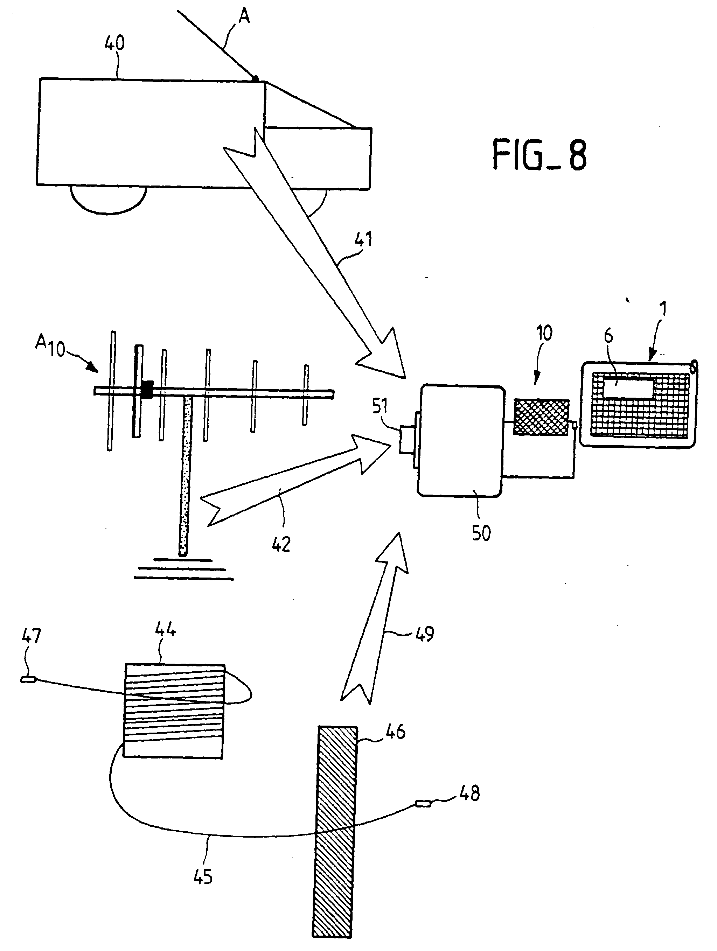

La figure 8 illustre différents modes de couplage mettant en oeuvre un circuit d'interface 50 tel qu'un boîtier d'adaptation ou un convertisseur permettant notamment un changement de fréquence.

Un véhicule 40 présentant une antenne A est relié par un câble coaxial au boîtier 50 dont deux sorties sont connectées aux bornes du résonateur 10 couplé au récepteur 1. Le résonateur 10 permet une canalisation du flux dans l'antenne ferrite 3, ce qui permet de s'affranchir des inconvénients dus au placement du récepteur 1 à l'intérieur du véhicule. L'antenne A peut aussi et de préférence, être une antenne active de pare-brise (par exemple de marque BOSCH ou PHILIPS).

Un deuxième mode de couplage met en oeuvre une antenne de réception A₁₀ reliée par une liaison coaxiale 42 à une entrée 51 du convertisseur 50 qui dans ce cas, réalise un changement de fréquence de manière à générer dans le résonateur 10 un signal de sortie dans une gamme de fréquences correspondant à celle du récepteur 1. Comme indiqué ci-dessus, l'optimisation est réalisée lorsque la fréquence du résonateur 10 est centrée aussi bien sur la bande de fréquences délivrée par le convertisseur de fréquence 50 que sur la bande des fréquences du récepteur 1.

Selon un troisième mode de couplage, un câble pour fibre optique 44 présentant une première extrémité 47 et dont une section 45 traverse un blindage 46, est relié par une liaison 49 au convertisseur 50 qui, dans le cas d'une fibre optique, réalise la conversion entre des signaux optiques en signaux électriques propres à alimenter le résonateur 10. Le convertisseur 50 peut avoir une fonction d'amplification pour augmenter le niveau de champ injecté. Il peut également avoir pour fonction de symétriser le signal : il n'y a alors plus de point de masse sur l'injecteur.

L'expérience a montré qu'un dispositif selon l'invention permettait de compenser notablement les pertes de champ lorsqu'un récepteur miniaturisé est disposé à l'intérieur d'un habitacle. Dans les cas correspondant à une optimisation, les pertes de champ peuvent être totalement compensées, c'est-à-dire dans ce cas, qu'un récepteur miniaturisé monté dans un réceptacle 7 à l'intérieur d'un véhicule présente un même niveau de réception lorsqu'il est utilisé en extérieur sans réceptacle 7.

Le dispositif selon l'invention est particulièrement avantageux en réception numérique. La mise en oeuvre d'un résonateur permet une remontée de signal permettant de dépasser largement le champ ou la tension reçue par l'antenne interne 3 du récepteur. Or, la réception numérique ne tolère pas les échos, c'est-à-dire les retards. Si deux niveaux identiques, l'un injecté sur l'antenne 3 et l'autre capté en direct par l'antenne 3 coexistent sur l'étage d'entrée du récepteur, il se peut que la réception soit complètement dégradée, dans le cas correspondant à des signaux en opposition de phase. Pour éviter ce phénomène, il faut que le signal injecté par le résonateur 10 prédomine sur le champ direct capté par l'antenne 3 du récepteur.

La mise en oeuvre d'un convertisseur de fréquence 50 (par exemple un mélangeur) permet de remédier aux problèmes d'échos et de retard entre champ direct et champ réinjecté par exemple en décalant de Δf la fréquence fo, Δf étant compris entre ± 1 et ± quelques MHz, par exemple de ± 1-2 MHz. Un récepteur "pager" de RDS recherche par balayage le signal RDS maximal. Il se calera donc sur la fréquence fo + Δf, du signal injecté.

Le dispositif selon l'invention permet d'obtenir un couplage optimisé évitant la mise en oeuvre de selfs et de bobines. Il comporte un résonateur contrôlé en fréquence et en largeur de bande avec un minimum de perte (dans le cas d'un recouvrement total du barreau de ferrite par la bande 21) et/ou un couplage optimal en flux (coaxialité de l'élément 10 et de l'antenne 3 ; même surface latérale pour ces deux éléments). En outre, le couplage est indépendant des masses extérieures étant donné que dans un résonateur, ce sont les phénomènes à l'intérieur du barreau de ferrite qui prédominent.

## Revendications

1. Dispositif de réception comportant un récepteur équipé d'une antenne intérieure en ferrite, et comprenant un élément de génération d'un signal radio-électrique (A, A₁₀, 44) relié à au moins un dispositif de couplage caractérisé en ce que le dispositif de couplage (10) est distinct de l'antenne ferrite et comporte un barreau de ferrite (20, 25, 28) ayant une surface externe dont une majeure partie est entourée par une boucle non fermée (21, 26), ladite boucle présentant un axe principal sensiblement aligné avec un axe principal de l'antenne ferrite, ce qui permet d'obtenir un couplage à la fois direct et directif.

2. Dispositif selon la revendication 1, caractérisé en ce qu'il comporte un circuit d'interface (50) pour réaliser une dite liaison entre ledit élément (A, A₁₀, 44) et le dispositif de couplage (8, 10).

3. Dispositif selon la revendication 2, caractérisé en ce que le circuit d'interface (50) est un convertisseur permettant un changement de fréquence.

4. Dispositif selon la revendication 3, caractérisé en ce que le récepteur est un récepteur d'émissions numériques et en ce que ledit changement de fréquence a une valeur comprise entre ± 1 et ± quelques MHz.

5. Dispositif de réception selon une des revendications 1 à 4, caractérisé en ce que ledit élément est une antenne (A, A₁₀) disposée à l'extérieur du récepteur (1).

6. Dispositif selon la revendication 4, caractérisé en ce que ladite boucle (21, 26) est fermée par un condensateur (C) de manière à obtenir une résonance du dispositif de couplage (10) à une fréquence sensiblement située dans une plage de fréquences de réception du récepteur (1).

7. Dispositif selon la revendication 6, caractérisé en ce que le récepteur (1) comporte un dispositif de transfert (39), sensiblement identique audit dispositif de couplage (10), et disposé entre celui-ci et l'antenne ferrite (3) de manière à produire un transfert d'induction vers l'antenne ferrite (3).

8. dispositif selon une des revendications 5 à 7, caractérisé en ce que le barreau de ferrite (20) est sensiblement de forme cubique.

9. Dispositif selon une des revendications 5 à 8, caractérisé en ce que l'antenne extérieure (A', A₁, A₂) est symétrique et présente deux bornes de raccordement et en ce qu'il comporte deux dispositifs de couplage (20) disposés de part et d'autre de l'antenne ferrite (3) du récepteur (1), chacun des dispositifs de couplage (20) ayant d'une part une première borne (24) connectée à une borne respective de l'antenne extérieure et étant d'autre part interconnectés par une deuxième borne (23).

10. Dispositif selon la revendication 9, caractérisé en ce que l'antenne extérieure est du type doublet (A₁, A₂).

11. Dispositif selon la revendication 9, caractérisé en ce que l'antenne extérieure est du type cadre (A').

## Patentansprüche

1. Empfangsvorrichtung mit einem Empfänger, der mit einer inneren Ferritantenne ausgestattet ist, und mit einem Element zur Erzeugung eines radio-elektrischen Signals (A, A10, 44), das mit zumindest einer Kopplungsvorrichtung (10) verbunden ist, dadurch gekennzeichnet, daß die Kopplungsvorrichtung (10) von der Ferritantenne verschieden ist und einen Ferritstab (20, 25, 28) aufweist, der eine Außenfläche hat, deren größter Teil von einer nicht geschlossenen Schleife (21, 26) umgeben ist, wobei die Schleife eine Hauptachse aufweist, die praktisch mit einer Hauptachse der Ferritantenne ausgerichtet ist, was ermöglicht, eine Kopplung zu erhalten, die zugleich direkt und richtungsgebend ist.

2. Vorrichtung gemäß Anspruch 1, dadurch gekennzeichnet, daß sie eine Anpassungsschaltung (50) zur Herstellung einer Verbindung zwischen dem Element (A, A10, 44) und der Kopplungsvorrichtung (8, 10) aufweist.

3. Vorrichtung gemäß Anspruch 2, dadurch gekennzeichnet, daß die Anpassungsschaltung (50) ein Wandler ist, der eine Frequenzänderung ermöglicht.

4. Vorrichtung gemäß Anspruch 3, dadurch gekennzeichnet, daß der Empfänger ein Empfänger für digitale Übertragungen ist, und daß die Frequenzänderung einen Wert zwischen +/- 1 und +/- einigen MHz hat.

5. Empfangsvorrichtung gemäß einem der Ansprüche 1 bis 4, dadurch gekennzeichnet, daß das Element eine Antenne (A, A10) ist, die außerhalb des Empfängers (1) angordnet ist.

6. Vorrichtung gemäß Anspruch 4, dadurch gekennzeichnet, daß die Schleife (21, 26) von einem Kondensator (C) derart geschlossen ist, daß man eine Resonanz der Kopplungsvorrichtung (10) auf einer Frequenz erhält, die praktisch in einem Empfangsfrequenzbereich des Empfängers (1) angeordnet ist.

7. Vorrichtung gemäß Anspruch 6, dadurch gekennzeichnet, daß der Empfänger (1) eine Übertragungsvorrichtung (39) aufweist, die praktisch identisch mit der Kopplungsvorrichtung (10) und zwischen dieser und der Ferritantenne (3) derart angeordnet ist, daß eine Induktionsübertragung zu der Ferritantenne (3) hin erzeugt wird.

8. Vorrichtung gemäß einem der Ansprüche 5 bis 7, dadurch gekennzeichnet, daß der Ferritstab (20) praktisch würfelförmig ist.

9. Vorrichtung gemäß einem der Ansprüche 5 bis 8, dadurch gekennzeichnet, daß die Außenantenne (A', A1, A2) symmetrisch ist und zwei Anschlußklemmen aufweist, und daß sie zwei Kopplungsvorrichtungen (20) aufweist, die beidseits von der Ferritantenne (3) des Empfängers (1) angeordnet sind, wobei jede der Kopplungsvorrichtungen (20) einerseits eine erste mit einer jeweiligen Klemme der Außenantenne verbundene Klemme (24) hat und andererseits durch eine zweite Klemme (23) zusammengeschaltet ist.

10. Vorrichtung gemäß Anspruch 9, dadurch gekennzeichnet, daß die Außenantenne von der Art Doppellinienantenne (A1, A2) ist.

11. Vorrichtung gemäß Anspruch 9, dadurch gekennzeichnet, daß die Außenantenne von der Art Rahmenantenne (A') ist.

## Claims

1. A receiving device consisting of a receiver equipped with an internal ferrite antenna, and including a radio-electric signal generating element (A, A₁₀, 44) connected to at least one coupling device, characterized by the fact that the coupling device (10) is distinct from the ferrite antenna and consists of a ferrite bar (20, 25, 28), having an external surface of which a major part is surrounded by a non-closed loop (21, 26), said loop presenting a principal axis noticeably aligned with a principal axis of the ferrite antenna, which makes it possible to obtain a coupling which is both direct and directive.

2. A device in accordance with claim 1, characterized by the fact that it includes an interference circuit (50) in order to implement said connection between said element (A, A₁₀, 44) and the coupling device (8, 10).

3. A device in accordance with claim 2, characterized by the fact that the interface circuit (50) is a converter permitting a frequency change.

4. A device in accordance with claim 3, characterized by the fact that the receiver is a numerical emission receiver and by the fact that said frequency change has a value included between ±1 and ± several MHz.

5. A reception device in accordance with one of the claims 1 to 4, characterized by the fact that said element is an antenna (A, A₁₀) located on the exterior of the receiver (1).

6. A device in accordance with claim 4, characterized by the fact that said loop (21, 26) is closed by a condenser (C) in order to obtain a resonance of the coupling device (10) with a frequency clearly within a frequency range of the receiver (1).

7. A device in accordance with claim 6, characterized by the fact that the receiver (1) includes a transfer device (39), clearly identical with the said coupling device (10), and disposed between the latter and the ferrite antenna (3) in order to produce an induction transfer to the ferrite antenna (3).

8. A device in accordance with one of the claims 5 to 7, characterized by the fact that the ferrite bar (20) is of a distinctly cubic shape.

9. A device in accordance with one of the claims 5 to 8, characterized by the fact that the external antenna (A', A₁, A₂) is symmetrical and presents two connecting terminals, and by the fact that it includes two coupling devices (20) located on both sides of a ferrite antenna (3) of the receiver (1), each of the coupling devices (20) having, on the one hand, one terminal (24) connected to a respective terminal of the external antenna, and being, on the other hand, interconnected by means of a second terminal (23).

10. A device in accordance with claim 9, characterized by the fact that the external antenna is of the dipole type (A₁, A₂).

11. A device in accordance with claim 9, characterized by the fact that the external antenna is of the frame type (A').
